# EUROPEAN PATENT APPLICATION

(11) **EP 2 490 170 A1**
(43) Date of publication of application: **22.08.2012**
(21) Application number: 10823406.3
(22) Date of filing: 13.10.2010
(51) Int. Cl.: G06Q 50/00, G08G 1/01

(54) **POSITIONAL INFORMATION ANALYSIS DEVICE AND POSITIONAL INFORMATION ANALYSIS METHOD**

(30) Priority: 14.10.2009 JP 2009237357
(71) Applicant: NTT DOCOMO, INC., Chiyoda-ku Tokyo 100-6150 (JP)
(72) Inventor: NAGATA, Tomohiro, Tokyo 100-6150 (JP); OKAJIMA, Ichiro, Tokyo 100-6150 (JP); KOBAYASHI, Motonari, Tokyo 100-6150 (JP); OYABU, Yuki, Tokyo 100-6150 (JP)
(74) Representative: Viering, Jentschura & Partner
(86) International application number: PCT/JP2010/067943
(87) International publication number: WO 2011/046138

(57) **Abstract**

To promptly provide useful person trip information, a location information analysis device (600) includes a selection module (601) that selects a starting point section and an end point section, a point data input module (602) that inputs the point data over a plurality of points of time about a plurality of users, a frequent appearance area extraction module (603) that extracts areas (frequent appearance areas) where the point data are densely congested in excess of a predetermined criterion on two-dimensional map data, a user trajectory extraction module (604) that finds trajectories between the frequent appearance areas for each of the users based on time-series transition of a relative location of the point data of each of the users in relation to the frequent appearance areas and extracts trajectories from the starting point section to the end point section among the trajectories between the frequent appearance areas of each of the users, and a user number calculation module (605) that calculates number of traveling users from the trajectories. The location information analysis device (600) may further include a total traveler number calculation module (606) that calculates total number of traveling people including people irrelevant to the point data, and an output module (607) that outputs the total number of traveling people.

## Description

### Technical Field

The present invention relates to a location information analysis device and a location information analysis method that analyze person trip information (for example, information on number of traveling people from a starting point section to an end point section or information on number of traveling people for each travel mode) based on point data containing location information indicating a location of a user, time information when the location information is obtained, and user identification information of the user.

### Background Art

Techniques to provide various services (information service etc.) according to location information of each user have been proposed. For example, a technique where a server device generates a destination list corresponding to the current location of a user (a list of places which have been selected as destinations by many users who have been in that location) and provides it to the user is proposed in Patent Literature 1.

### Citation List

### Patent Literature

PTL 1: Japanese Unexamined Patent Application Publication No. 2007-110341

### Summary of Invention

### Technical Problem

However, although there have been proposed many techniques that provide services to each user according to location information of the user, not many techniques have been proposed that analyzes location information of a large number of users in a macro perspective.

On the other hand, there is an ever increasing need for person trip information targeting a large number of users for the purpose of analysis of consumer behavior and the like.

In light of the above problem, an object of the present invention is to efficiently analyze location information of a large number of users which are easily obtainable and promptly provide useful person trip information.

### Solution to Problem

A location information analysis device according to one aspect of the present invention is a location information analysis device that analyzes information on number of traveling people from a starting point section to an end point section based on point data containing location information indicating a location of a user, time information when the location information is obtained, and user identification information of the user, which includes a selection module that selects a starting point section and an end point section, a point data input module that inputs the point data over a plurality of points of time about a plurality of users, a frequent appearance area extraction module that extracts areas where the point data are densely congested in excess of a predetermined criterion as frequent appearance areas of the plurality of users based on a distribution of the point data when the input point data are plotted on two-dimensional map data, a user trajectory extraction module that combines the point data of each of the users and the extracted frequent appearance areas on the two-dimensional map data, finds trajectories between the frequent appearance areas for each of the users based on time-series transition of a relative location of the point data of each of the users in relation to the frequent appearance areas in the combined data, and extracts trajectories from the selected starting point section to the selected end point section among the trajectories between the frequent appearance areas of each of the users as starting to end point trajectories, and a user number calculation module that calculates number of traveling users from the starting point section to the end point section by counting a plurality of starting to end point trajectories for the same user as one trajectory in the extracted starting to end point trajectories. The location information analysis device may further include a total traveler number calculation module that calculates total number of traveling people from the starting point section to the end point section, including people irrelevant to the point data in addition to the users, based on the calculated number of traveling users and a ratio of the number of traveling users to the total number of traveling people.

Note that "the ratio of the number of traveling users to the total number of traveling people" mentioned above indicates a value of the ratio of (the total number of traveling people : the number of traveling users), that is, a value obtained by dividing the total number of traveling people by the number of traveling users. Hereinafter, in this specification, "the ratio of B to A" indicates a value of the ratio of (A:B), which is, a value obtained by dividing A by B.

As the "point data" referred to herein, measured location data obtained by a GPS locationing system or a location information acquisition system by PRACH PD, or OPS data may be used. Note that, however, because the OPS data does not contain accurate location information (latitude and longitude information), the point data can be obtained from the OPS data, for example, by converting area information where a given user is located into location information (latitude and longitude information) of the center of gravity of the area on the assumption that the user is located at the center of gravity of the area.

In the above-described location information analysis device, a starting point section and an end point section are selected through the selection module, and the point data input module inputs the point data over a plurality of points of time about a plurality of users. Next, the frequent appearance area extraction module extracts areas where the point data are densely congested in excess of a predetermined criterion as frequent appearance areas of the plurality of users based on a distribution of the point data when the input point data are plotted on two-dimensional map data. Then, the user trajectory extraction module combines the point data of each of the users and the extracted frequent appearance areas on the two-dimensional map data, finds trajectories between the frequent appearance areas for each of the users based on time-series transition of a relative location of the point data of each of the users in relation to the frequent appearance areas in the combined data, and extracts trajectories from the selected starting point section to the selected end point section among the trajectories between the frequent appearance areas of each of the users as starting to end point trajectories. Further, the user number calculation module calculates number of traveling users from the starting point section to the end point section by counting a plurality of starting to end point trajectories for the same user as one trajectory in the extracted starting to end point trajectories. The number of traveling users from the starting point section to the end point section is thereby obtained. Furthermore, the total traveler number calculation module calculates total number of traveling people from the starting point section to the end point section, including people irrelevant to the point data in addition to the users, based on the calculated number of traveling users and a ratio of the number of traveling users to the total number of traveling people. The total number of traveling people from the starting point section to the end point section is thereby obtained. In this manner, it is possible to efficiently analyze location information of a large number of users which are relatively easily obtainable and promptly provide useful person trip information.

The location information analysis device may further include a travel mode determination module that determines a travel mode in the starting to end point trajectories based on a plurality of point data on the extracted starting to end point trajectories and prestored route map data of public transportation, and a travel mode-specific user number calculation module that calculates number of traveling users from the starting point section to the end point section for each travel mode by counting a plurality of starting to end point trajectories for the same user as one trajectory in the extracted starting to end point trajectories. Further, the location information analysis device may further include a travel mode-specific traveler number calculation module that calculates number of traveling people from the starting point section to the end point section, including people irrelevant to the point data in addition to the users, for each travel mode based on the calculated number of traveling users for each travel mode and a ratio of the number of traveling users to the number of traveling people. In this case, it is possible to provide more useful person trip information which contains the number of traveling people for each travel mode in addition to the total number of traveling people from the starting point section to the end point section.

Note that the user trajectory extraction module may have a configuration including a combining module that classifies the input point data by user and combines the point data of each of the users and the extracted frequent appearance areas on the two-dimensional map data, a trajectory derivation module that finds trajectories between the frequent appearance areas for each of the users based on time-series transition of a relative location of the point data of each of the users in relation to the frequent appearance areas in data obtained by combining the point data of each of the users and the frequent appearance areas on the two-dimensional map data, a target frequent appearance area extraction module that extracts frequent appearance areas located in the selected starting point section and the selected end point section as target frequent appearance areas, a user extraction module that extracts users in the extracted target frequent appearance areas, a trajectory extraction module that extracts trajectories between the frequent appearance areas of the extracted users from the trajectories between the frequent appearance areas for each of the users, and a starting to end point trajectory extraction module that extracts trajectories from the starting point section to the end point section among the extracted trajectories as starting to end point trajectories.

Further, the travel mode determination module may have a configuration including a travel speed calculation module that obtains a distance and a time difference between the point data adjacent along time series among the point data over a plurality of points of time about each of the users and calculates a travel speed between the point data based on the distance and the time difference between the point data, and a determination module that determines a travel mode between the point data based on the calculated travel speed between the point data, the location information contained in the point data, and the prestored route map data of public transportation.

A technique to extract the frequent appearance areas may include four different aspects depending on whether to classify the point data by user or not and whether to perform extraction based on the density of the point data or based on the grouping of the point data. Therefore, the configuration aspect of the frequent appearance area extraction module may include the following four different aspects.

Specifically, the frequent appearance area extraction module may have a configuration including a total user density calculation module that calculates density of the input point data of all users in each of a plurality of sections partitioned on the two-dimensional map data in advance, and a first extraction module that extracts areas composed of a plurality of adjacent sections where the calculated density of the point data of all users is equal to or higher than a predetermined criterion value as the frequent appearance areas.

Further, the frequent appearance area extraction module may have a configuration including a grouping module that obtains a distance between the point data when the input point data of all users are plotted on the two-dimensional map data and groups the point data of which the obtained distance is equal to or shorter than a predetermined criterion distance, and a second extraction module that extracts areas including a plurality of grouped point data on the two-dimensional map data as the frequent appearance areas.

Further, the frequent appearance area extraction module may have a configuration including a classification module that classifies the input point data of all users by user, a user density calculation module that calculates density of the classified point data of each of the users in each of a plurality of sections partitioned on the two-dimensional map data in advance, an adding module that adds the calculated density of the point data of each of the users in each of the sections together for each of the sections and thereby obtains density of the point data of all users in each of the sections, and a third extraction module that extracts areas composed of a plurality of adjacent sections where the calculated density of the point data of all users is equal to or higher than a predetermined criterion value as the frequent appearance areas.

Further, the frequent appearance area extraction module may have a configuration including a classification module that classifies the input point data of all users by user, a user grouping module that obtains a distance between the point data when the classified point data of each of the users are plotted on two-dimensional map data and groups the point data of which the obtained distance is equal to or shorter than a predetermined criterion distance for each of the users, a superposition module that superposes areas including a plurality of point data grouped for each of the users on the two-dimensional map data for all users on the two-dimensional map data, and a fourth extraction module that extracts superposed areas as the frequent appearance areas.

The user number calculation module may leave one trajectory and delete the other trajectories among a plurality of starting to end point trajectories for the same user, and determine the remaining number of trajectories among the extracted starting to end point trajectories as the number of traveling users from the starting point section to the end point section. Likewise, the travel mode-specific user number calculation module may leave one trajectory and delete the other trajectories among a plurality of starting to end point trajectories for the same user, and determine the remaining number of trajectories for each travel mode among the extracted starting to end point trajectories as the number of traveling users from the starting point section to the end point section for each travel mode.

Further, the total traveler number calculation module may calculate the total number of traveling people from the starting point section to the end point section by calculating a ratio of an actually measured value of the number of traveling users (the number of unique users contained in all point data (that is, the number of users obtained by eliminating the redundancy of the point data for the same person)) to a daytime population figure related to any one of a predetermined frequent appearance area, the starting point section and the end point section as a ratio of the number of traveling users to the total number of traveling people, and multiplying the calculated ratio by the number of traveling users.

Likewise, the travel mode-specific traveler number calculation module may calculate total number of traveling people from the starting point section to the end point section for each travel mode by calculating a ratio of an actually measured value of the number of traveling users to a daytime population figure related to any one of a predetermined frequent appearance area, the starting point section and the end point section as a ratio of the number of traveling users to total number of traveling people, and multiplying the calculated ratio by the number of traveling users for each travel mode.

A location information analysis device according to one aspect of the present invention may have the following configuration. Specifically, the location information analysis device is a location information analysis device that analyzes information on number of traveling people from a starting point section to an end point section based on point data containing location information indicating a location of a user, time information when the location information is obtained, and user identification information of the user, which includes a selection module that selects a starting point section and an end point section, a point data input module that inputs the point data over a plurality of points of time about a plurality of users, a frequent appearance area extraction module that extracts areas where the point data are densely congested in excess of a predetermined criterion as frequent appearance areas of the plurality of users based on a distribution of the point data when the input point data are plotted on two-dimensional map data, a user trajectory extraction module that combines the point data of each of the users and the extracted frequent appearance areas on the two-dimensional map data, finds trajectories between the frequent appearance areas for each of the users based on time-series transition of a relative location of the point data of each of the users in relation to the frequent appearance areas in the combined data, and extracts trajectories from the selected starting point section to the selected end point section among the trajectories between the frequent appearance areas of each of the users as starting to end point trajectories, a user number calculation module that calculates number of traveling users from the starting point section to the end point section by counting a plurality of starting to end point trajectories for the same user as one trajectory in the extracted starting to end point trajectories, a total traveler number calculation module that calculates total number of traveling people from the starting point section to the end point section, including people irrelevant to the point data in addition to the users, based on the calculated number of traveling users and a ratio of the number of traveling users to the total number of traveling people, and an output module that outputs the calculated total number of traveling people from the starting point section to the end point section.

The above location information analysis device may further include a travel mode determination module that determines a travel mode in the starting to end point trajectories based on a plurality of point data on the extracted starting to end point trajectories and prestored route map data of public transportation, a travel mode-specific user number calculation module that calculates number of traveling users from the starting point section to the end point section for each travel mode by counting a plurality of starting to end point trajectories for the same user as one trajectory in the extracted starting to end point trajectories, and a travel mode-specific traveler number calculation module that calculates number of traveling people from the starting point section to the end point section, including people irrelevant to the point data in addition to the users, for each travel mode based on the calculated number of traveling users for each travel mode and a ratio of the number of traveling users to the number of traveling people, and the output module may further output the calculated number of traveling people from the starting point section to the end point section for each travel mode.

The invention related to a location information analysis device may be regarded as the invention related to a location information analysis method and described as follows. The invention related to a location information analysis method achieves the same effects and advantages.

A location information analysis method according to one aspect of the present invention is a location information analysis method, executed by a location information analysis device, for analyzing information on number of traveling people from a starting point section to an end point section, which includes a selection step of selecting a starting point section and an end point section, a point data input step of inputting point data over a plurality of points of time about a plurality of users, the point data containing location information indicating a location of a user, time information when the location information is obtained, and user identification information of the user, a frequent appearance area extraction step of extracting areas where the point data are densely congested in excess of a predetermined criterion as frequent appearance areas of the plurality of users based on a distributiondistribution of the point data when the input point data are plotted on two-dimensional map data, a user trajectory extraction step of combining the point data of each of the users and the extracted frequent appearance areas on the two-dimensional map data, finding trajectories between the frequent appearance areas for each of the users based on time-series transition of a relative location of the point data of each of the users in relation to the frequent appearance areas in the combined data, and extracting trajectories from the selected starting point section to the selected end point section among the trajectories between the frequent appearance areas of each of the users as starting to end point trajectories, and a user number calculation step of calculating number of traveling users from the starting point section to the end point section by counting a plurality of starting to end point trajectories for the same user as one trajectory in the extracted starting to end point trajectories. The location information analysis method may further include a total traveler number calculation step of calculating total number of traveling people from the starting point section to the end point section, including people irrelevant to the point data in addition to the users, based on the calculated number of traveling users and a ratio of the number of traveling users to the total number of traveling people. The location information analysis method may further include an output step of outputting the calculated total number of traveling people from the starting point section to the end point section.

A location information analysis method according to one aspect of the present invention may be as follows. Specifically, the location information analysis method is a location information analysis method, executed by a location information analysis device, for analyzing information on number of traveling people from a starting point section to an end point section, which includes a selection step of selecting a starting point section and an end point section, a point data input step of inputting point data over a plurality of points of time about a plurality of users, the point data containing location information indicating a location of a user, time information when the location information is obtained, and user identification information of the user, a frequent appearance area extraction step of extracting areas where the point data are densely congested in excess of a predetermined criterion as frequent appearance areas of the plurality of users based on a distribution of the point data when the input point data are plotted on two-dimensional map data, a user trajectory extraction step of combining the point data of each of the users and the extracted frequent appearance areas on the two-dimensional map data, finding trajectories between the frequent appearance areas for each of the users based on time-series transition of a relative location of the point data of each of the users in relation to the frequent appearance areas in the combined data, and extracting trajectories from the selected starting point section to the selected end point section among the trajectories between the frequent appearance areas of each of the users as starting to end point trajectories, a user number calculation step of calculating number of traveling users from the starting point section to the end point section by counting a plurality of starting to end point trajectories for the same user as one trajectory in the extracted starting to end point trajectories, a total traveler number calculation step of calculating total number of traveling people from the starting point section to the end point section, including people irrelevant to the point data in addition to the users, based on the calculated number of traveling users and a ratio of the number of traveling users to the total number of traveling people, and an output step of outputting the calculated total number of traveling people from the starting point section to the end point section.

The above location information analysis method may further include a travel mode determination step of determining a travel mode in the starting to end point trajectories based on a plurality of point data on the extracted starting to end point trajectories and prestored route map data of public transportation, a travel mode-specific user number calculation step of calculating number of traveling users from the starting point section to the end point section for each travel mode by counting a plurality of starting to end point trajectories for the same user as one trajectory in the extracted starting to end point trajectories, and a travel mode-specific traveler number calculation step of calculating number of traveling people from the starting point section to the end point section, including people irrelevant to the point data in addition to the users, for each travel mode based on the calculated number of traveling users for each travel mode and a ratio of the number of traveling users to the number of traveling people, and in the output step, the location information analysis device may further output the calculated number of traveling people from the starting point section to the end point section for each travel mode.

### Advantageous Effects of Invention

According to the present invention, it is possible to efficiently analyze location information of a large number of users which are easily obtainable and promptly provide useful person trip information.

### Brief Description of Drawings

Fig. 1 is a system configuration diagram of a communication system according to first and second embodiments.
Fig. 2 is a functional block diagram of a location information analysis device according to the first embodiment.
Fig. 3 is a diagram showing various configuration examples of a frequent appearance area extraction module.
Fig. 4 is a diagram showing a configuration example of a user trajectory extraction module.
Fig. 5 is a flowchart related to a location information analysis process according to the first embodiment.
Fig. 6 is a flowchart showing various aspects of a frequent appearance area extraction process.
Fig. 7 is a diagram to explain the process of Fig. 5.
Fig. 8 is a diagram showing point data obtained from a location information DB.
Fig. 9 is a diagram showing point data in the course of a process.
Fig. 10 is a diagram showing a display output example of the total number of traveling people.
Fig. 11 is a functional block diagram of a location information analysis device according to the second embodiment.
Fig. 12 is a flowchart related to a location information analysis process according to the second embodiment.
Fig. 13 is a flowchart related to a travel mode determination process.
Fig. 14 is a diagram showing a display output example of the total number of traveling people and the number of traveling people by each travel mode.
Fig. 15 is a diagram showing line data in the course of a process.
Fig. 16 is a diagram showing another configuration example of a frequent appearance area extraction module.
Fig. 17 is a flowchart showing another aspect of a frequent appearance area extraction module.

### Description of Embodiments

Embodiments of the present invention are described hereinafter with reference to the appended drawings. The same elements are denoted by the same reference numerals where possible, and repeated explanation thereof is omitted.

### [First Embodiment]

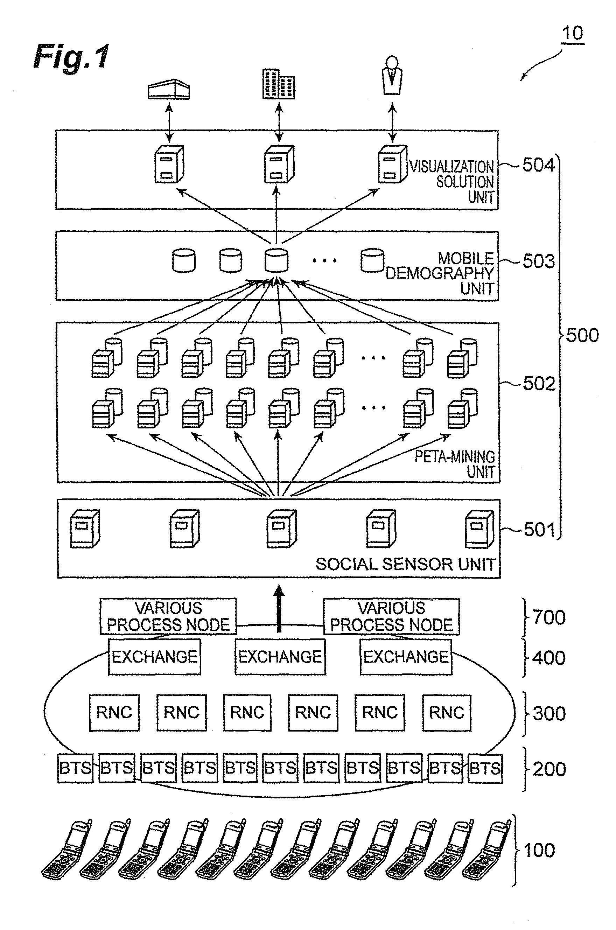

Fig. 1 is a system configuration diagram of a communication system 10 according to the embodiment. As shown in Fig. 1, the communication system 10 includes a mobile station 100, a BTS (Base Transceiver Station) 200, an RNC (Radio Network Controller) 300, a exchange 400, a various types of process node 700, and a control center 500. Further, the control center 500 includes a social sensor unit 501, a peta-mining unit 502, a mobile demography unit 503, and a visualization solution unit 504.

The exchange 400 collects location information of the mobile station 100 through the BTS 200 and the RNC 300. The RNC 300 can measure the location of the mobile station 100 using a delay value in an RRC connection request signal when communication connection is performed with the mobile station 100. The exchange 400 can receive the location information of the mobile station 100 measured in this manner when the mobile station 100 executes communication connection. The exchange 400 stores the received location information and outputs the collected location information to the control center 500 at predetermined timing or in response to a request from the control center 500. Note that typically about one thousand RNCs 300 are located all over Japan. On the other hand, about three hundred exchanges 400 are located in Japan.

The various types of process node 700 acquire location information of the mobile station 100 through the RNC 300 and the exchange 400, perform recalculation of the location or the like in some cases, and output the collected location information to the control center 500 at predetermined timing or in response to a request from the control center 500.

The control center 500 includes the social sensor unit 501, the peta-mining unit 502, the mobile demography unit 503, and the visualization solution unit 504 as described above, and each unit performs statistical processing using the location information of the mobile station 100.

The social sensor unit 501 is a server device that collects data containing the location information of the mobile station 100 and the like from each exchange 400 and various types of process node 700, or offline. The social sensor unit 501 is configured to be able to receive data output from the exchange 400 and the various types of process node 700 at regular intervals or acquire data from the exchange 400 and the various types of process node 700 according to the timing predetermined in the social sensor unit 501.

The peta-mining unit 502 is a server device that converts the data received from the social sensor unit 501 into a predetermined data format. For example, the peta-mining unit 502 performs sorting using the user ID as a key or sorting by area.

The mobile demography unit 503 is a server device that performs aggregation processing of the data processed in the peta-mining unit 502, which is, counting of each item. For example, the mobile demography unit 503 can count the number of users located in a certain area or perform aggregation of the area distribution.

The visualization solution unit 504 is a server device that processes the data aggregated in the mobile demography unit 503 into visible. For example, the visualization solution unit 504 can map the aggregated data onto a map. The data processed in the visualization solution unit 504 is provided to corporations, government and other public offices or individuals and used for retail development, road traffic survey, disaster risk management, environmental protection and the like. Note that the statistically processed information is processed so as not to identify individuals and the like to avoid invasion of privacy as a matter of course.

It should be noted that the social sensor unit 501, the peta-mining unit 502, the mobile demography unit 503 and the visualization solution unit 504 are server devices as described above, and they have a basic configuration of a typical information processing device (specifically, CPU, RAM, ROM, input device such as keyboard and mouse, communication device that performs communication with the outside, storage device that stores information, output device such as display and printer) as a matter of course, though not shown.

### [Configuration of Location Information Analysis Device]

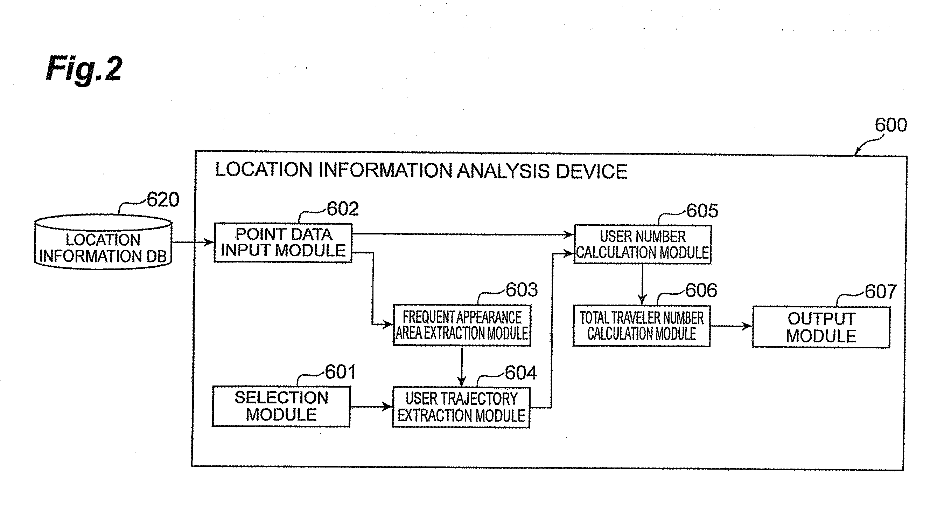

A location information analysis device according to the embodiment is described hereinafter. Fig. 2 shows a functional block diagram of a location information analysis device 600. As shown in Fig. 2, the location information analysis device 600 includes a selection module 601, a point data input module 602, a frequent appearance area extraction module 603, a user trajectory extraction module 604, a user number calculation module 605, a total traveler number calculation module 606, and an output module 607. The function of each module is described later.

The location information in this embodiment is processed in the form of point data containing location information indicating a location of a user, time information when the location information is obtained, and user identification information of the user. The point data over a plurality of points of time about a plurality of users are stored in a location information database 620. As the "point data" referred to herein, measured location data obtained by a GPS locationing system or a location information acquisition system by PRACH PD, or OPS data may be used. Note that, however, because the OPS data does not contain accurate location information (latitude and longitude information), the point data can be obtained from the OPS data, for example, by converting area information where a given user is located into location information (latitude and longitude information) of the center of gravity of the area on the assumption that the user is located at the center of gravity of the area.

A general correspondence between the logical configuration of Fig. 2 and the system configuration of Fig. 1 is described hereinbelow. In this example, the location information analysis device 600 corresponds to the peta-mining unit 502, the mobile demography unit 503 and the visualization solution unit 504 of Fig. 1, and the location information database 620 corresponds to the peta-mining unit 502 of Fig. 1.

The function of each module of the location information analysis device 600 of Fig. 2 is described hereinafter. The selection module 601 is a structure for an operator of the location information analysis device 600 to select a starting point section and an end point section. The point data input module 602 reads the point data over a plurality of points of time about a plurality of users from the location information database 620 and inputs them to the location information analysis device 600.

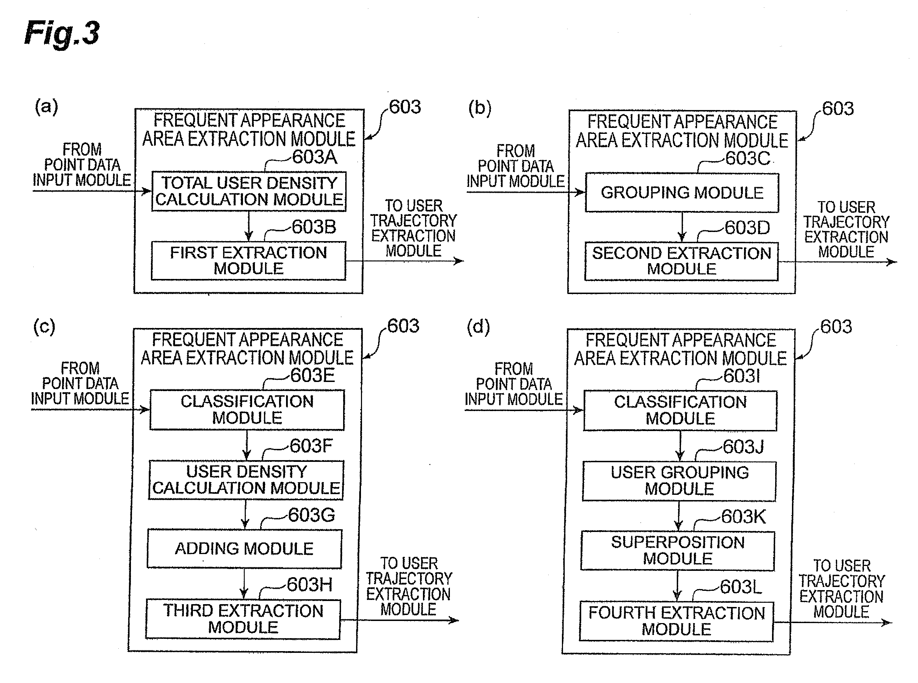

The frequent appearance area extraction module 603 extracts areas where the point data are densely congested in excess of a predetermined criterion as frequent appearance areas based on the distribution of the point data when the input point data are plotted on two-dimensional map data. The "frequent appearance area" referred to herein indicates an area where there is a recognizable trend that a large number of users, not a specific individual, frequently visit and stay. The frequent appearance area extraction process by the frequent appearance area extraction module 603 may be in various aspects, and various functional block configurations shown in Figs. 3(a) to (d) may be employed according to the respective aspects. In this embodiment, four different functional block configurations (Figs. 3(a) to (d)), depending on whether to classify the point data by user or not and whether to perform extraction based on the density of the point data or based on the grouping of the point data as an extraction method, are described hereinbelow.

As shown in Fig. 3(a), the frequent appearance area extraction module 603 may include a total user density calculation module 603A that calculates the density of the point data of all users in each of a plurality of sections partitioned on the two-dimensional map data in advance, and a first extraction module 603B that extracts areas where the calculated density of the point data of all users is equal to or higher than a predetermined criterion value as frequent appearance areas. This configuration corresponds to the aspect that performs extraction based on the density of the point data as an extraction method without classifying the point data by user.

Further, as shown in Fig. 3(b), the frequent appearance area extraction module 603 may include a grouping module 603C that obtains a distance between the point data when the point data of all users are plotted on the two-dimensional map data and groups the point data of which the obtained distance is equal to or shorter than a predetermined criterion distance, and a second extraction module 603D that extracts areas that include a plurality of grouped point data on the two-dimensional map data as frequent appearance areas. This configuration corresponds to the aspect that performs extraction based on the grouping of the point data as an extraction method without classifying the point data by user.

Further, as shown in Fig. 3(c), the frequent appearance area extraction module 603 may include a classification module 603E that classifies the point data of all users by user, a user density calculation module 603F that calculates the density of the classified point data of each of the users in each of a plurality of sections partitioned on the two-dimensional map data in advance, an adding module 603G that adds the calculated density of the point data of each of the users in each of the sections together for each of the sections and thereby obtains the density of the point data of all users in each of the sections, and a third extraction module 603H that extracts areas where the obtained density of the point data of all users is equal to or higher than a predetermined criterion value as frequent appearance areas. This configuration corresponds to the aspect that classifies the point data by user and performs extraction based on the density of the point data as an extraction method.

Further, as shown in Fig. 3(d), the frequent appearance area extraction module 603 may include a classification module 6031 that classifies the point data of all users by user, a user grouping module 603J that obtains a distance between the point data when the classified point data of each of the users are plotted on the two-dimensional map data and groups the point data of which the obtained distance is equal to or shorter than a predetermined criterion distance for each of the users, a superposition module 603K that superposes areas that include a plurality of point data grouped for each of the users on the two-dimensional map data for all users on the two-dimensional map data, and a fourth extraction module 603L that extracts superposed areas as frequent appearance areas. This configuration corresponds to the aspect that classifies the point data by user and performs extraction based on the grouping of the point data as an extraction method.

Among the four different aspects described above, in the aspect of Fig. 3(c) that performs the calculation of the density of the point data from the point data classified by user and the aspect of Fig. 3(d) that performs the grouping of the point data classified by user, distribution of processing load can be achieved by executing the density calculation process and the grouping process in a distributed manner. Specifically, a large number of target users may be divided into a plurality of groups, and the density calculation process and the grouping process may be executed on the point data of each of the divided target user groups.

Referring back to Fig. 2, the user trajectory extraction module 604 combines the point data of each of the users and the extracted frequent appearance areas on the two-dimensional map data, finds trajectories between the frequent appearance areas for each of the users based on the time-series transition of the relative location of the point data of each of the users in relation to the frequent appearance areas, and extracts trajectories which travel from the starting point section to the end point section among the trajectories between the frequent appearance areas of each of the users as starting to end point trajectories.

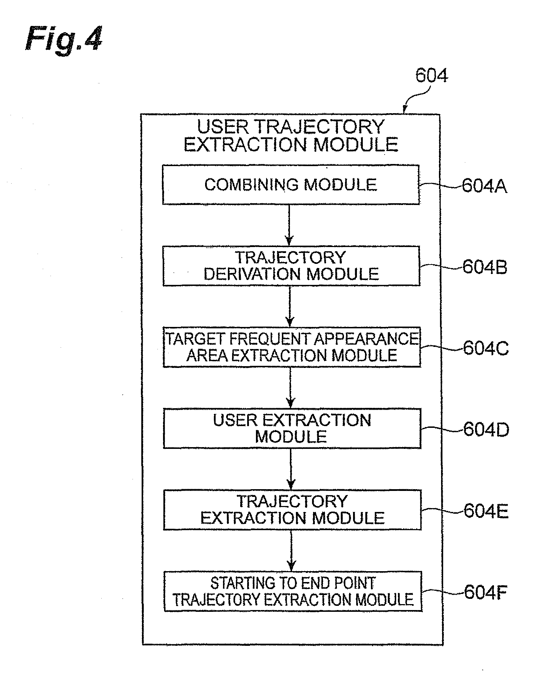

To be more specific, the user trajectory extraction module 604 may be configured as shown in Fig. 4. Specifically, as shown in Fig. 4, the user trajectory extraction module 604 includes a combining module 604A that classifies the input point data by user and combines the point data of each of the users and the extracted frequent appearance areas on the two-dimensional map data, a trajectory derivation module 604B that finds trajectories between the frequent appearance areas for each of the users based on the time-series transition of the relative location of the point data of each of the users in relation to the frequent appearance areas in the the combined data (the data obtained by combining the point data of each of the users and the extracted frequent appearance areas on the two-dimensional map data), a target frequent appearance area extraction module 604C that extracts frequent appearance areas located in the starting point section and the end point section as target frequent appearance areas, a user extraction module 604D that extracts users in the target frequent appearance areas, a trajectory extraction module 604E that extracts trajectories between the frequent appearance areas of the extracted users from the trajectories between the frequent appearance areas of each of the users, and a starting to end point trajectory extraction module 604F that extracts trajectories which travel from the starting point section to the end point section among the extracted trajectories as starting to end point trajectories.

Next, the user number calculation module 605 shown in Fig. 2 calculates the number of traveling users from the starting point section to the end point section by counting a plurality of starting to end point trajectories for the same user as one trajectory in the starting to end point trajectories extracted by the user trajectory extraction module 604. The total traveler number calculation module 606 calculates the total number of traveling people from the starting point section to the end point section, including general people other than the users (people who are irrelevant to the point data) and the users, by multiplying the calculated number of traveling users by the ratio of the number of traveling users to the total number of traveling people, and the output module 607 outputs the total number of traveling people from the starting point section to the end point section calculated by the total traveler number calculation module 606. Note that, as "the ratio of the number of traveling users to the total number of traveling people", a terminal contact ratio, which is the ratio of "the number of mobile terminals of a specific carrier for which location information is obtained" to "the population in an area of a predetermined range", may be used. An example of using the terminal contact ratio, a way of calculating the terminal contact ratio and the like are described later. Further, in respect to the above-described ratio (including the terminal contact ratio), a ratio for each area, a ratio for each gender, a ratio for each age group and the like may be calculated for use.

### [Various Processing in Location Information Analysis Device]

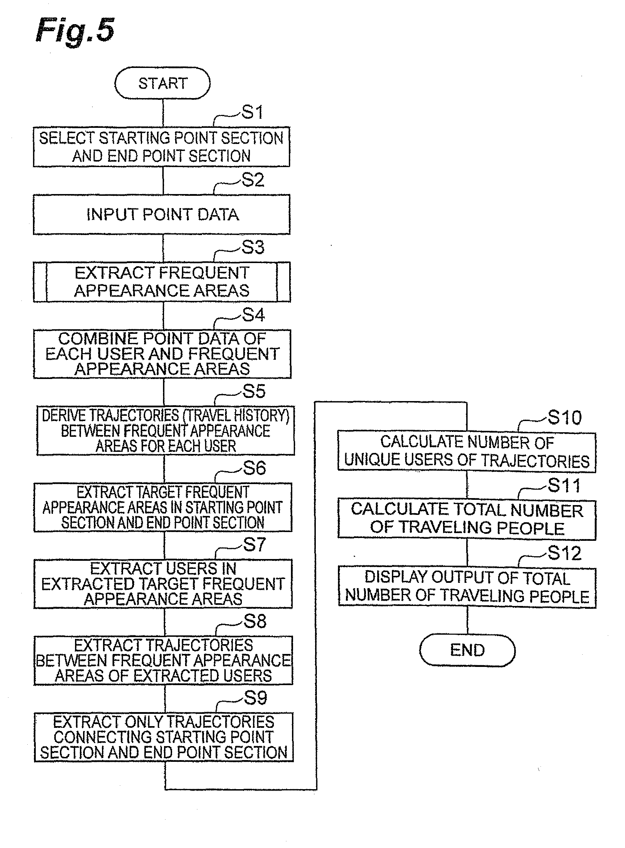

A location information analysis process of Fig. 5 that is executed in the location information analysis device 600 is described hereinbelow.

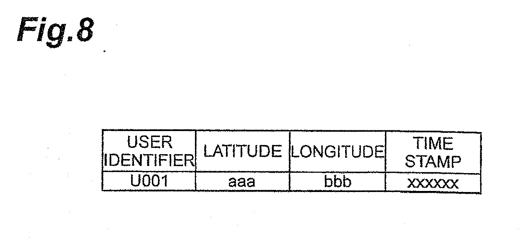

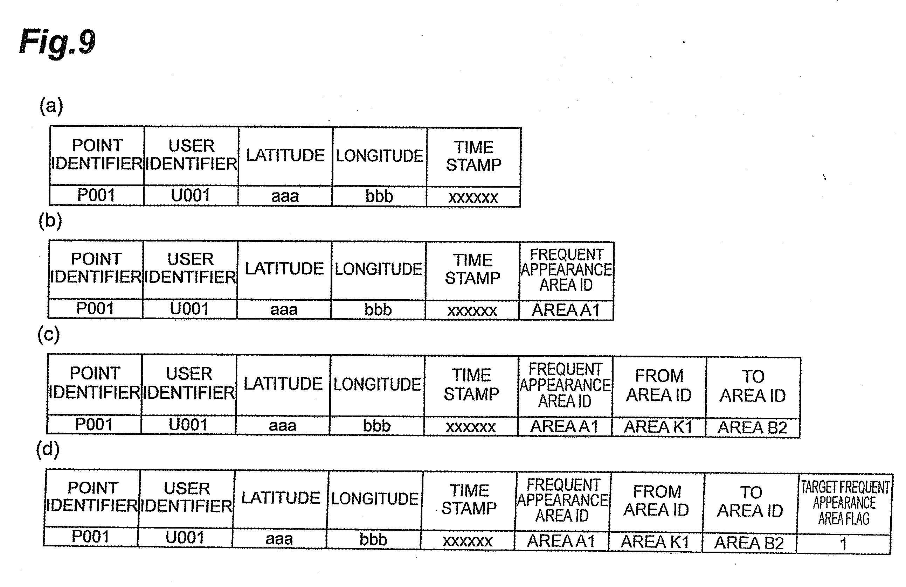

An operator of the location information analysis device 600 selects a starting point section and an end point section using the selection module 601 (Step S1 in Fig. 5), and the point data input module 602 reads point data over a plurality of points of time about a plurality of users from the location information database 620 and inputs them to the location information analysis device 600 (Step S2). The point data contains location information (latitude information and longitude information) indicating a location of a user, time information (time stamp) when the location information is obtained, and user identification of the user as shown in Fig. 8. The point data input module 602 adds a unique identifier (point identifier) to each point data at the time of inputting the point data in Step S2 and passes the point data with the identifier added as shown in Fig. 9(a) to the frequent appearance area extraction module 603.

Next, the frequent appearance area extraction module 603 extracts areas where the point data are densely congested in excess of a predetermined criterion as frequent appearance areas based on the distribution of the point data when the input point data are plotted on two-dimensional map data (Step S3). There are four different aspects for the extraction process of Step S3 as described earlier. Each aspect is described hereinbelow.

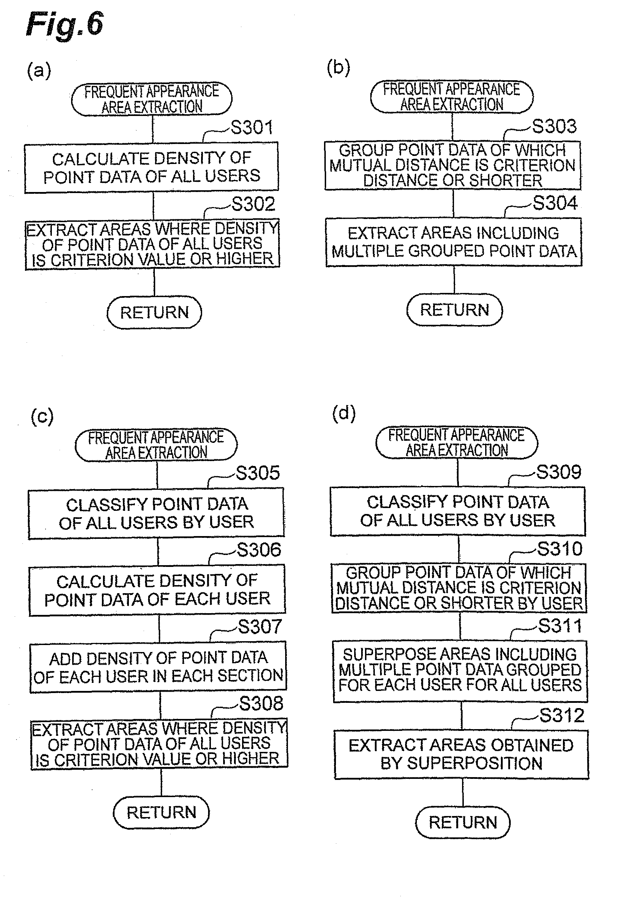

In the first aspect that performs extraction based on the density of the point data as an extraction method without classifying the point data by user, the frequent appearance area extraction module 603 has the configuration of Fig. 3(a) described earlier, and, as shown in Fig. 6(a), the total user density calculation module 603A calculates the density of the point data of all users in each of a plurality of sections partitioned on the two-dimensional map data in advance (Step S301), and the first extraction module 603B extracts areas where the calculated density of the point data of all users is equal to or higher than a predetermined criterion value as frequent appearance areas (Step S302). Note that, the above-described partition into sections may be partition into a large number of square sections like a mesh or partition into a large number of polygonal sections (the same applies to the partition below). Further, as the density of the point data, it is desirable to calculate Kernel density of the point data in terms of the stability of calculation results (the same applies to the point data density calculation below).

Further, in the second aspect that performs extraction based on the grouping of the point data as an extraction method without classifying the point data by user, the frequent appearance area extraction module 603 has the configuration of Fig. 3(b) described earlier, and, as shown in Fig. 6(b), the grouping module 603C obtains a distance between the point data when the point data of all users are plotted on the two-dimensional map data and groups the point data of which the obtained distance is equal to or shorter than a predetermined criterion distance (Step S303), and the second extraction module 603D extracts areas that include a plurality of grouped point data on the two-dimensional map data as frequent appearance areas (Step S304).

Further, in the third aspect that classifies the point data by user and performs extraction based on the density of the point data as an extraction method, the frequent appearance area extraction module 603 has the configuration of Fig. 3(c) described earlier, and, as shown in Fig. 6(c), the classification module 603E classifies the point data of all users by user (Step S305), the user density calculation module 603F calculates the density of the classified point data of each of the users in each of a plurality of sections partitioned on the two-dimensional map data in advance (Step S306). Then, the adding module 603G adds the calculated density of the point data of each of the users in each of the sections together for each of the sections and thereby obtains the density of the point data of all users in each of the sections (Step S307), and the third extraction module 603H extracts areas where the obtained density of the point data of all users is equal to or higher than a predetermined criterion value as frequent appearance areas (Step S308).

Further, in the fourth aspect that classifies the point data by user and performs extraction based on the grouping of the point data as an extraction method, the frequent appearance area extraction module 603 has the configuration of Fig. 3(d) described earlier, and, as shown in Fig. 6(d), the classification module 6031 classifies the point data of all users by user (Step S309), and the user grouping module 603J obtains a distance between the point data when the classified point data of each of the users are plotted on the two-dimensional map data and groups the point data of which the obtained distance is equal to or shorter than a predetermined criterion distance for each of the users (Step S310). Then, the superposition module 603K superposes areas that include a plurality of point data grouped for each of the users on the two-dimensional map data for all users on the two-dimensional map data (Step S311), and the fourth extraction module 603L extracts superposed areas as frequent appearance areas (Step S312). Note that, the superposition in Step S31 1 results in a part where overlap of areas of a plurality of users occur and a part where overlap does not occur (an area of a single user only); in this case, it is further preferred to employ an extraction method that extracts areas that include a half of the region (a half of the region closer to the boundary with the adjacent overlap part) in the non-overlap part and the overlap part as frequent appearance areas.

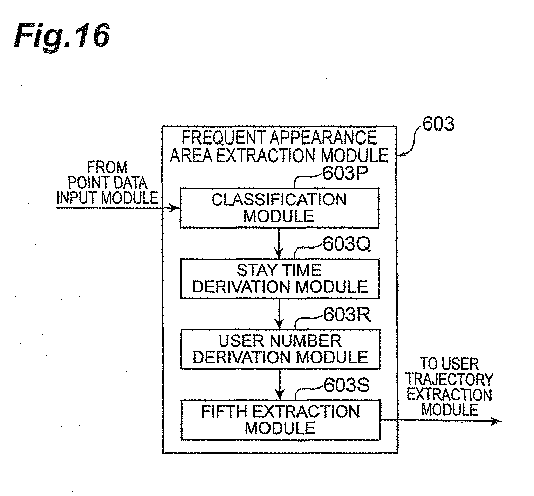

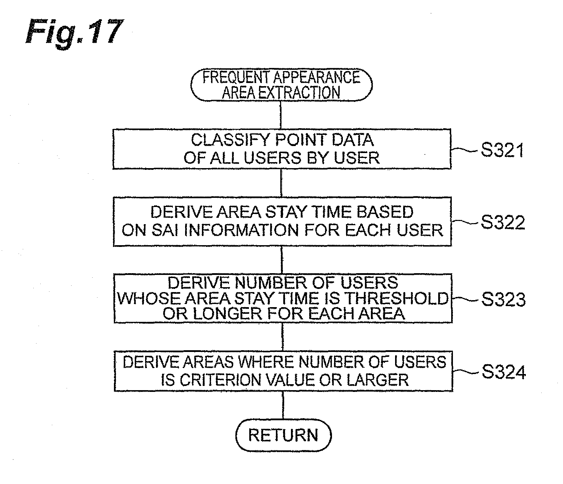

It should be noted that the location information shown in Fig. 8 may contain SAI (Subscriber Area ID) information which is added in the PRACH-PD process. In this case, the frequent appearance area extraction process may be the process shown in Fig. 17, for example, and the frequent appearance area extraction module 603 for implementing this process may have a configuration including a classification module 603P, a stay time derivation module 603Q, a user number derivation module 603R, and a fifth extraction module 603 S as shown in Fig. 16, for example. Specifically, the classification module 603P of Fig. 16 classifies the point data of all users by user (Step S321 of Fig. 17), and next, the stay time derivation module 603Q obtains the minimum value and the maximum value of time stamp for each group of temporally continuous location information containing SAI information indicating that a user is located in a certain area for each of users, and calculates a difference between the maximum value and the minimum value as a length of time during which the user has been staying in the certain area (which is referred to hereinafter as an area stay time) (Step S322). The area stay time for one or a plurality of areas is thereby obtained for each of the users. As for each area, the area stay time for one or a plurality of users is obtained for each of the areas. Next, the user number derivation module 603R obtains the number of users whose area stay time is equal to or longer than a predetermined threshold for each of the areas (Step S323), and the fifth extraction module 603 S extracts areas where the number of users obtained in Step S323 is equal to or larger than a criterion value as frequent appearance areas (Step S324). In this manner, the frequent appearance areas can be extracted appropriately even when the location information contains the SAI information added in the PRACH-PD process.

The frequent appearance area information (frequent appearance area ID) obtained in the extraction process in Step S3 of Fig. 5 and the point data of Fig. 9(a) are passed to the user trajectory extraction module 604.

In Fig. 5, in the next step S4, the combining module 604A of the user trajectory extraction module 604 classifies the input point data of Fig. 9(a) by user and combines the point data of each of the users and the extracted frequent appearance area information (frequent appearance area ID) on the two-dimensional map data. The point data after the combination shown in Fig. 9(b) is thereby obtained. Next, the trajectory derivation module 604B derives trajectories between the frequent appearance areas for each of the users based on the time-series transition of the relative location of the point data of each of the users in relation to the frequent appearance areas in the point data of Fig. 9(b) obtained by the combination of Step S4 (the data obtained by combining the point data of each of the users and the frequent appearance areas on the two-dimensional map data) (Step S5). For example, in the case where the frequent appearance areas of a given user are "area A" at 10:10am, "area B" at 10:20am, 10:30am and 10:40am, and "area C" at 10:50am, when "area B" is assumed as the frequent appearance area, it is found for "area B" that the user has "come from the area A" and "gone to the area C". Specifically, for the frequent appearance area "area B" as a trajectory between the frequent appearance areas, "area A" is obtained as "From area" because of coming from the area A, and "area C" is obtained as "To area" because of going to the area C. The trajectory derivation module 604B adds the obtained From area ID and To area ID to the point data of Fig. 9(b) and thereby generates the point data of Fig. 9(c). Note that addition of the From area ID and the To area ID to the point data is not an absolute necessity

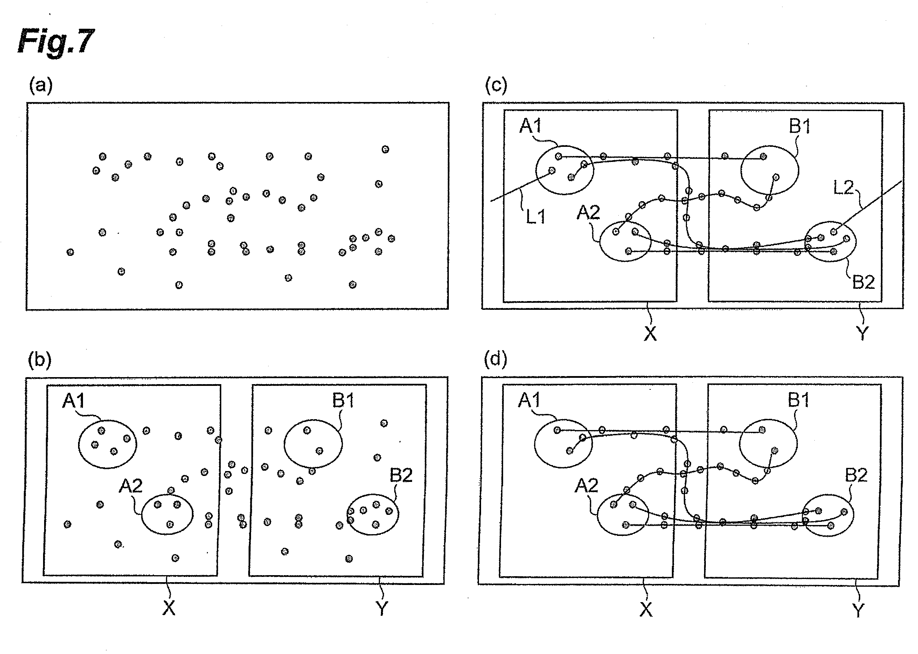

Then, the target frequent appearance area extraction module 604C extracts the frequent appearance areas located in the starting point section and the end point section as target frequent appearance areas (Step S6). In this Step, the target frequent appearance area extraction module 604C sets "1" to a target frequent appearance area flag only for the point data relevant to the target frequent appearance areas among the point data of Fig. 9(c). Note that the default value of the target frequent appearance area flag is "0". Therefore, the target frequent appearance area flag of only the point data relevant to the target frequent appearance areas is set as "1". For example, the target frequent appearance areas A1, A2, B1 and B2 located in the starting point section X and the end point section Y are extracted as shown in Fig. 7(b), and the target frequent appearance area flag is set as "1" only for the point data relevant to the target frequent appearance areas A1, A2, B1 and B2 among the point data distributed on the two-dimensional map data as shown in Fig. 7(a).

Then, the user extraction module 604D extracts users in the extracted target frequent appearance areas (Step S7). For example, the user extraction module 604D may extract only the point data of which target frequent appearance area flag is set as "1" and extract users in the target frequent appearance areas from the extracted point data.

Then, the trajectory extraction module 604E extracts trajectories between the frequent appearance areas related to the users in the target frequent appearance areas extracted in Step S7 among the trajectories between the frequent appearance areas for each of the users (Step S8). For example, trajectories connecting the point data related to the users in the target frequent appearance areas A1, A2, B1 and B2 are extracted as shown in Fig. 7(c). In the example of Fig. 7(c), one trajectory between the target frequent appearance areas A1 and B1, one trajectory between the target frequent appearance areas A1 and B2, one trajectory between the target frequent appearance areas A2 and B1, and two trajectories between the target frequent appearance areas A2 and B2 are extracted, and further a trajectory L1 between the target frequent appearance area A1 and a frequent appearance area which is not shown, and a trajectory L2 between the target frequent appearance area B2 and a frequent appearance area which is not shown are extracted.

Further, the starting to end point trajectory extraction module 604F extracts trajectories which travel from the starting point section to the end point section among the extracted trajectories as starting to end point trajectories (Step S9). In the example of Fig. 7(c), the trajectories L1 and L2 which are not trajectories from the starting point section X to the end point section Y are excluded, and one trajectory between the target frequent appearance areas A1 and B1, one trajectory between the target frequent appearance areas A1 and B2, one trajectory between the target frequent appearance areas A2 and B1, and two trajectories between the target frequent appearance areas A2 and B2 shown in Fig. 7(d) are extracted as the starting to end point trajectories.

Then, the user number calculation module 605 calculates the number of traveling users from the starting point section to the end point section by counting a plurality of starting to end point trajectories for the same user as one trajectory in the extracted starting to end point trajectories (Step S10). In this step, the user number calculation module 605 may leave one trajectory and delete the other trajectories among a plurality of starting to end point trajectories for the same user, and determine the remaining number of trajectories among the extracted starting to end point trajectories as the number of traveling users from the starting point section to the end point section.

Then, the total traveler number calculation module 606 calculates the total number of traveling people from the starting point section to the end point section, including general people other than the users (people who are irrelevant to the point data) and the users, by multiplying the calculated number of traveling users by the ratio of the number of traveling users to the total number of traveling people (Step S11). In this step, the total traveler number calculation module 606 may calculate the total number of traveling people from the starting point section to the end point section by calculating the ratio of the actually measured value of the number of traveling users to the daytime population figure related to any one of the predetermined frequent appearance area, the starting point section and the end point section as the ratio of the number of traveling users to the total number of traveling people, and multiplying the calculated ratio by the number of traveling users. For example, the total number of traveling people from the starting point section to the end point section may be calculated by obtaining the ratio of the actually measured value of the number of traveling users to the daytime population figure for each of the starting point section and the end point section and multiplying the ratio by the number of traveling users, using the averaging value of them as the ratio. Further, a predetermined and stored value (e.g. 20 times, 30 times etc.) may be used as the ratio of the number of traveling users to the total number of traveling people, and the total traveler number calculation module 606 may calculate the total number of traveling people from the starting point section to the end point section by multiplying the predetermined ratio by the number of traveling users.

Further, as the ratio of the number of traveling users to the total number of traveling people, a terminal contact ratio, which is the ratio of "the number of mobile terminals of a specific carrier for which location information is obtained" to "the population in an area of a predetermined range", may be used. Specifically, the total traveler number calculation module 606 may obtain the total number of traveling people from the starting point section to the end point section by correcting the number of traveling users using the terminal contact ratio. For example, the total number of traveling people from the starting point section to the end point section may be calculated by dividing the number of traveling users by the terminal contact ratio. Note that the terminal contact ratio may be prestored in the location information analysis device I or input each time the processing is performed. Further, the total traveler number calculation module 606 may calculate the terminal contact ratio based on information about the population in an area of a predetermined range which is externally input to the location information analysis device 1 or prestored in the location information analysis device 1 and the number of mobile terminals of a specific carrier for which location information is obtained. For example, the terminal contact ratio may be calculated by dividing the number of mobile terminals of a specific carrier for which location information is obtained by the value of the population in an area of a predetermined range. It is of course not an absolute necessity to calculate the terminal contact ratio each time. In this manner, by calculating the terminal contact ratio using the number of mobile terminals of a specific carrier for which location information is obtained, it is possible to calculate the total number of traveling users in consideration of the number of mobile terminals for which location information is not obtained (for example, mobile terminals in power-off mode, mobile terminals located out of area and the like).

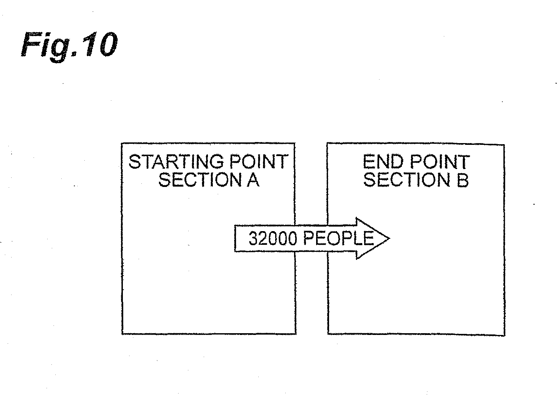

Further, the output module 607 outputs the total number of traveling people from the starting point section to the end point section calculated by the total traveler number calculation module 606 as shown in Fig. 10, for example (Step S12). Fig. 10 shows an example where, in the diagram representing an arrow from the starting point section A to the end point section B, the starting point section A and the end point section B, the total number of traveling people (for example, 32000 people) is shown in the arrow.

According to the first embodiment described above, it is possible to efficiently analyze location information of a large number of users which are relatively easily obtainable and promptly provide useful person trip information.

### [Second Embodiment]

A system configuration of a communication system according to a second embodiment is the same as the system configuration in the first embodiment of Fig. 1, and explanation of the system configuration is omitted.

### [Configuration of Location Information Analysis Device]

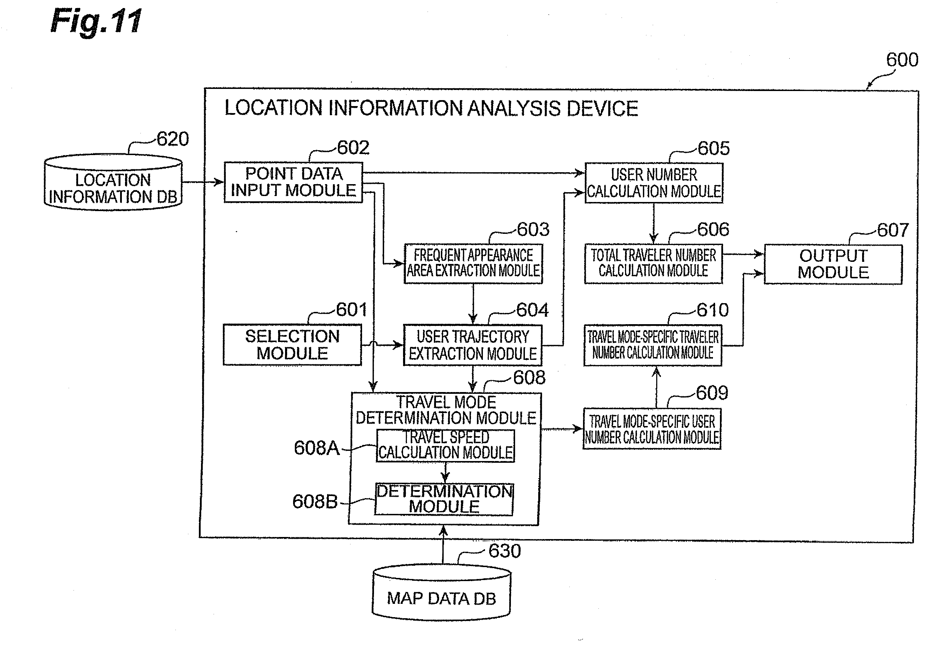

A location information analysis device according to the second embodiment is described hereinafter. Fig. 11 shows a functional block diagram of the location information analysis device 600 according to the second embodiment. As shown in Fig. 11, the location information analysis device 600 according to the second embodiment has a configuration in which a travel mode determination module 608, a travel mode-specific user number calculation module 609, and a travel mode-specific traveler number calculation module 610 are added to the location information analysis device of the first embodiment shown in Fig. 2. The added elements are described hereinbelow.

The travel mode determination module 608 determines a travel mode in starting to end point trajectories based on a plurality of point data on the starting to end point trajectories extracted by the user trajectory extraction module 604 and prestored route map data of public transportation. The travel mode determination module 608 may have a configuration including a travel speed calculation module 608A that obtains a distance and a time difference between the point data adjacent along time series among a plurality of point data on the starting to end point trajectories extracted by the user trajectory extraction module 604 and calculates a travel speed between the point data based on the distance and the time difference between the point data, and a determination module 608B that determines a travel mode between the point data based on the calculated travel speed between the point data, the location information contained in the point data and the prestored route map data of public transportation.

The travel mode-specific user number calculation module 609 calculates the number of traveling users from the starting point section to the end point section for each travel mode by counting a plurality of starting to end point trajectories for the same user as one trajectory in the starting to end point trajectories.

The travel mode-specific traveler number calculation module 610 calculates the number of traveling people, including general people other than the users (people who are irrelevant to the point data) and the users, traveling from the starting point section to the end point section for each travel mode by multiplying the calculated number of traveling users for each travel mode by the ratio of the number of traveling users to the number of traveling people. The calculated number of traveling people from the starting point section to the end point section for each travel mode is output together with the total number of traveling people from the starting point section to the end point section for all travel modes by the output module 607.

### [Various Processing in Location Information Analysis Device]

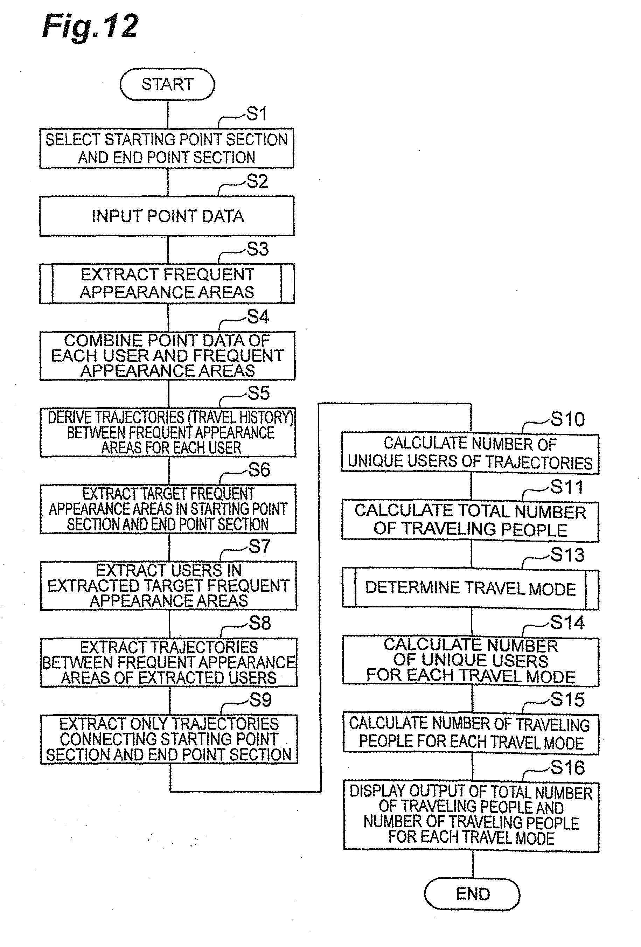

A location information analysis process of Fig. 12 that is executed in the location information analysis device 600 according to the second embodiment is described hereinbelow. In the location information analysis process of Fig. 12, processing in Steps S1 to S11 is the same as those in the location information analysis process according to the first embodiment described earlier, and thus explanation is omitted, and processing after Step S13 of Fig. 12 is described hereinbelow.

In Step S 13 of Fig. 12, the travel mode determination module 608 determines a travel mode in the starting to end point trajectories based on a plurality of point data on the starting to end point trajectories extracted by the user trajectory extraction module 604 and prestored route map data of public transportation in the below-described manner.

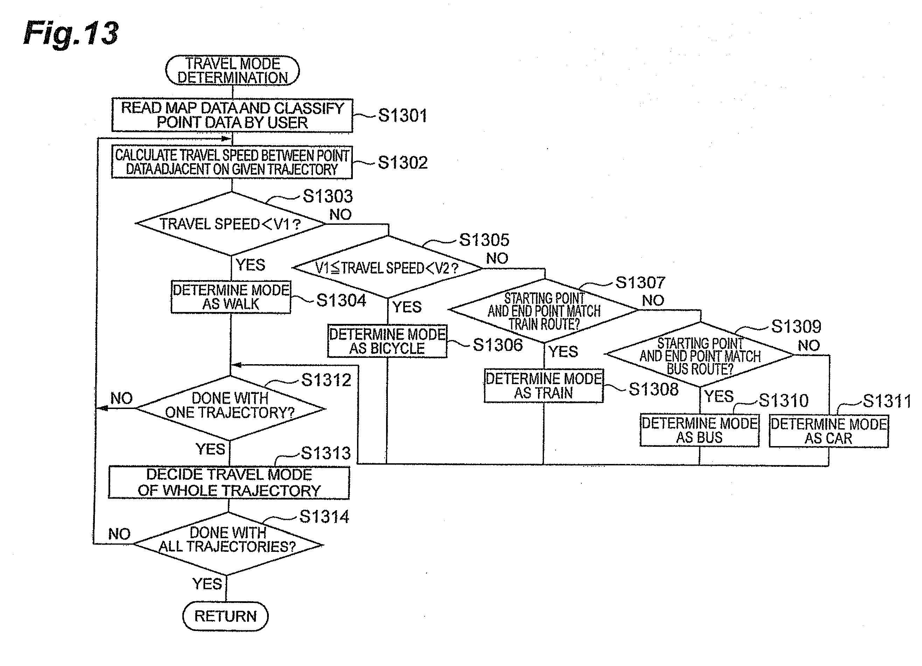

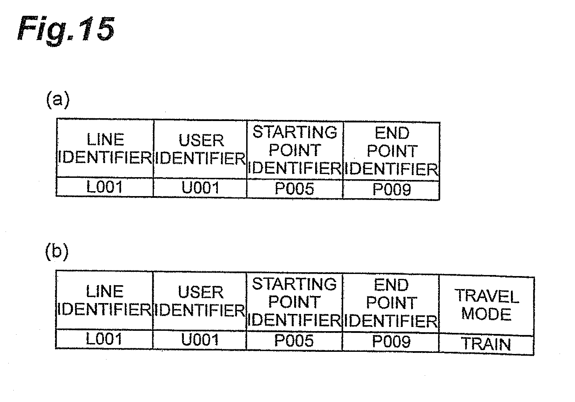

Specifically, the travel mode determination module 608 first reads map data from a map database 630 (Step S1301) as shown in Fig. 13. Further, in this step, the travel mode determination module 608 receives point data to which a point identifier is added (Fig. 9(a)) from a point data input module 602, classifies the point data by user and arranges them in time series, regards a plurality of point data corresponding to a series of travel history records of a certain user as one line in the arranged point data, assigns a unique identifier (line identifier) to each line, and thereby generates line data as shown in Fig. 15(a). The line data is generated in units of point data adjacent along time series in one line (one section), and the line data contains a line identifier, a travel mode in the section, a point identifier at the upstream point of the section, and a point identifier at the downstream point of the section as shown in Fig. 15(a).

Next, the travel mode determination module 608 sets two point data adjacent among the point data arranged in time series of a target user as a target, obtains a distance between the target point data from the location information of the two target point data and also obtains a time difference between the target point data from the time stamps of the target point data, divides the obtained distance between the target point data by the time difference and thereby calculates a travel speed between the target point data (Step S1302). Note that an interval between the two adjacent point data set as a target is assumed as "section", the older one (on the upstream side in time series) of the two point data is referred to as "upstream point", and the newer one (on the downstream side in time series) of the two point data is referred to as "downstream point".

Then, the travel mode determination module 608 determines whether the calculated travel speed V is lower than a predetermined reference speed V 1 for walk or not (Step S1303) and, when the travel speed V is lower than the reference speed V1, the travel mode determination module 608 determines the travel mode between the target point data as "walk" (Step S 1304).

When the travel speed V is not lower than the reference speed V1, the travel mode determination module 608 determines whether the travel speed V is equal to or higher than the reference speed V1 and is lower than a predetermined reference speed V2 for bicycle (Step S1305) and, when the travel speed V is equal to or higher than the reference speed V1 and is lower than the reference speed V2, the travel mode determination module 608 determines the travel mode between the target point data as "bicycle" (Step S1306).

When the travel speed V is equal to or higher than the reference speed V2, the travel mode determination module 608 refers to the prestored train route map data and determines whether at least one of the upstream point and the downstream point is located on the train route or not (Step S1307), and, when at least one of the upstream point and the downstream point is located on the train route, the travel mode determination module 608 determines the travel mode between the target point data as "train" (Step S1308).

When the determination results in "No" in Step S1308, the travel mode determination module 608 refers to the prestored bus route map data and determines whether at least one of the upstream point and the downstream point is located on the bus route or not (Step S1309), and, when at least one of the upstream point and the downstream point is located on the bus route, the travel mode determination module 608 determines the travel mode between the target point data as "bus" (Step S1310). On the other hand, when the determination results in "No" in Step S1309, the travel mode determination module 608 determines the travel mode between the target point data as "car" (Step S1311).

Then, the travel mode determination module 608 adds the travel mode information obtained by the above-described determination to the line data of Fig. 15(a) to thereby generate line data of Fig. 15(b), and stores the generated line data of Fig. 15(b) (the line data to which the travel mode information is added).

The processing of Steps S1302 to S1311 described above is then executed on the next adjacent point data in one trajectory as a target. When the processing of Steps S1302 to S1311 ends for one trajectory, the process proceeds to Step S1313 and decides the travel mode of one whole trajectory in the following manner. Specifically, when one whole trajectory has a single travel mode, that travel mode is decided as the travel mode of the whole trajectory. On the other hand, when one whole trajectory includes a plurality of travel modes, the travel mode of the whole trajectory is decided as follows according to a predetermined priority (for example, the order of priority: train>car>bus>bicycle>walk). When "train" among a plurality of travel modes is included, "train" is decided as the travel mode of the whole trajectory. When "train" is not included and "car" is included, "car" is decided as the travel mode of the whole trajectory. When "train" and "car" are not included and "bus" is included, "bus" is decided as the travel mode of the whole trajectory. When "train", "car" and "bus" are not included and "bicycle" and "walk" are included, "bicycle" is decided as the travel mode of the whole trajectory. Further, as another method, the lengths of time taken for the respective travel modes may be compared, and a travel mode that has taken the longest time may be decided as the travel mode. Furthermore, as another method, when one whole trajectory includes a plurality of travel modes, the time-series sequence of the obtained travel modes may be decided as a travel mode pattern and managed. For example, when "walk", "train", "bus" and "walk" are included, "walk-train-bus-walk" may be decided as the travel mode pattern. In this method, when a pattern composed of a plurality of travel modes is complicated, a specific travel mode may be eliminated from the pattern. For example, when it is composed of a plurality of travel modes, "walk" may be eliminated and, in this case, when the travel mode includes "walk", "train" and "bus", "train-bus" is decided as the travel mode pattern.

After that, the processing of Steps S1302 to S1313 is repeated until it is done with all trajectories. When the processing is completed for all trajectories, the process of Fig. 13 ends and returns to Fig. 12, and proceeds to the next step S14.

Then, the travel mode-specific user number calculation module 609 calculates the number of traveling users from the starting point section to the end point section for each travel mode by counting a plurality of starting to end point trajectories for the same user as one trajectory in the starting to end point trajectories (Step S 14). In this step, the travel mode-specific user number calculation module 609 may leave one trajectory and delete the other trajectories among a plurality of starting to end point trajectories for the same user, and determine the remaining number of trajectories for each travel mode among the extracted starting to end point trajectories as the number of traveling users from the starting point section to the end point section for each travel mode.

Then, the travel mode-specific traveler number calculation module 610 calculates the number of traveling people, including general people other than the users (people who are irrelevant to the point data) and the users, traveling from the starting point section to the end point section for each travel mode by multiplying the calculated number of traveling users for each travel mode by the ratio of the number of traveling users to the number of traveling people (Step S15). In this step, the travel mode-specific traveler number calculation module 610 may calculate the number of traveling people from the starting point section to the end point section for each travel mode by calculating the ratio of the actually measured value of the number of traveling users to the daytime population figure related to any one of the predetermined frequent appearance area, the starting point section and the end point section as the ratio of the number of traveling users to the number of traveling people, and multiplying the calculated ratio by the number of traveling users for each travel mode. For example, the number of traveling people from the starting point section to the end point section for each travel mode may be calculated by obtaining the ratio of the actually measured value of the number of traveling users to the daytime population figure for each of the starting point section and the end point section and multiplying the ratio by the number of traveling users for each travel mode, using the averaging value of them as the ratio. Further, a predetermined and stored value (e.g. 20 times, 30 times etc.) may be used as the ratio of the number of traveling users to the number of traveling people, and the travel mode-specific traveler number calculation module 610 may calculate the number of traveling people from the starting point section to the end point section for each travel mode by multiplying the predetermined ratio by the number of traveling users for each travel mode. Note that, as described in the first embodiment, a terminal contact ratio, which is the ratio of "the number of mobile terminals of a specific carrier for which location information is obtained" to "the population in an area of a predetermined range", may be used as the ratio of the number of traveling users to the total number of traveling people. Further, in respect to the above-described ratio (including the terminal contact ratio), a ratio for each area, a ratio for each gender, a ratio for each age group and the like may be calculated for use.

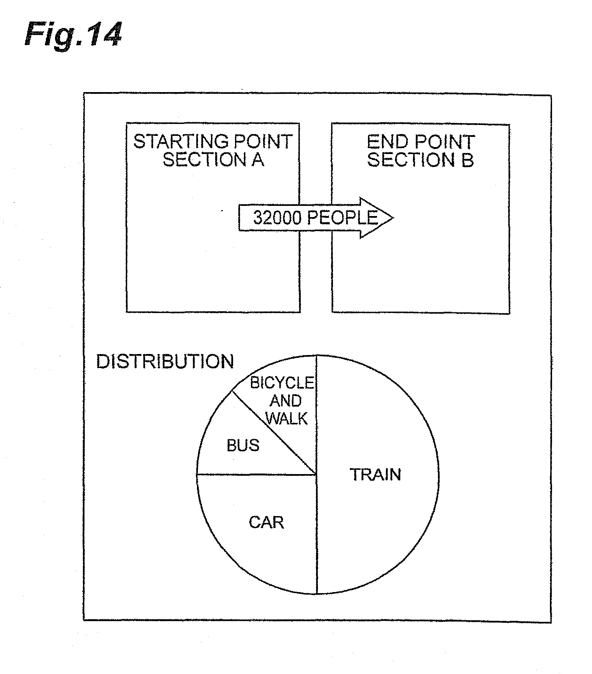

Further, the output module 607 outputs the number of traveling people from the starting point section to the end point section for each travel mode calculated in Step S15 together with the total number of traveling people from the starting point section to the end point section calculated in Step S11 (Step S16). For example, the output module 607 integrates the number of traveling people by bicycle and the number of traveling people on foot and calculates the ratio about the number of traveling people for each travel mode to thereby obtain the ratio of people such as 50% by train, 25% by car, 12.5% by bus and 12.5% by bicycle and walk and place a pie chart indicating the distribution of the total number of traveling people (the ratio about the number of traveling people for each travel mode) below the diagram indicating the total number of traveling people (for example, 32000 people) as shown in Fig. 14. Besides, the output module 607 may display the number of traveling people for each travel mode (for example, 16000 people by train, 8000 people by car, 400 people by bus and 4000 people by bicycle and walk) below the diagram indicating the total number of traveling people (for example, 32000 people).

According to the second embodiment described above, it is possible to output the number of traveling people for each travel mode in addition to the total number of traveling people from the starting point section to the end point section and thereby provide more useful person trip information.

### Reference Signs List

10...Communication system, 100...Mobile station, 200...BTS, 300...RNC, 400...Exchange, 500...Control center, 501...Social sensor unit, 502...Peta-mining unit, 503...Mobile demography unit, 504... Visualization solution unit, 600...Information analysis device, 601...Selection module, 602...Point data input module, 603...Frequent appearance area extraction module, 603A...Total user density calculation module, 603B...First extraction module, 603C...Grouping module, 603D...Second extraction module, 603E...Classification module, 603F...User density calculation module, 603G...Adding module, 603H...Third extraction module, 603I...Classification module, 603J...User grouping module, 603K...Superposition module, 603L...Fourth extraction module, 604...User trajectory extraction module, 604A...Combining module, 604B...Trajectory derivation module, 604C...Target frequent appearance area extraction module, 604D...User extraction module, 604E...Trajectory extraction module, 604F...Starting to end point trajectory extraction module, 605...User number calculation module, 606...Total traveler number calculation module, 607...Output module, 608...Travel mode determination module, 609...Travel mode-specific user number calculation module, 610...Travel mode-specific traveler number calculation module, 620...Location information database , 630...Map database, 700 ... Various process node

## Claims

1. A location information analysis device that analyzes information on number of traveling people from a starting point section to an end point section based on point data containing location information indicating a location of a user, time information when the location information is obtained, and user identification information of the user, comprising:
a point data input module that inputs the point data over a plurality of points of time about a plurality of users;
a frequent appearance area extraction module that extracts areas where the point data are densely congested in excess of a predetermined criterion as frequent appearance areas of the plurality of users based on a distribution of the point data when the input point data are plotted on two-dimensional map data;
a user trajectory extraction module that combines the point data of each of the users and the extracted frequent appearance areas on the two-dimensional map data, finds trajectories between the frequent appearance areas for each of the users based on time-series transition of a relative location of the point data of each of the users in relation to the frequent appearance areas in the combined data, and extracts trajectories from the selected starting point section to the selected end point section among the trajectories between the frequent appearance areas of each of the users as starting to end point trajectories; and
a user number calculation module that calculates number of traveling users from the starting point section to the end point section by counting a plurality of starting to end point trajectories for the same user as one trajectory in the extracted starting to end point trajectories.

2. The location information analysis device according to Claim 1, further comprising:
a total traveler number calculation module that calculates total number of traveling people from the starting point section to the end point section, including people irrelevant to the point data in addition to the users, based on the calculated number of traveling users and a ratio of the number of traveling users to the total number of traveling people.

3. The location information analysis device according to Claim 1 or 2, further comprising:
a travel mode determination module that determines a travel mode in the starting to end point trajectories based on a plurality of point data on the extracted starting to end point trajectories and prestored route map data of public transportation; and
a travel mode-specific user number calculation module that calculates number of traveling users from the starting point section to the end point section for each travel mode by counting a plurality of starting to end point trajectories for the same user as one trajectory in the extracted starting to end point trajectories.

4. The location information analysis device according to Claim 3, further comprising:
a travel mode-specific traveler number calculation module that calculates number of traveling people from the starting point section to the end point section, including people irrelevant to the point data in addition to the users, for each travel mode based on the calculated number of traveling users for each travel mode and a ratio of the number of traveling users to the number of traveling people.

5. The location information analysis device according to any one of Claims 1 to 4, wherein the user trajectory extraction module comprises:
a combining module that classifies the input point data by user and combines the point data of each of the users and the extracted frequent appearance areas on the two-dimensional map data;
a trajectory derivation module that finds trajectories between the frequent appearance areas for each of the users based on time-series transition of a relative location of the point data of each of the users in relation to the frequent appearance areas in data obtained by combining the point data of each of the users and the frequent appearance areas on the two-dimensional map data;
a target frequent appearance area extraction module that extracts frequent appearance areas located in the selected starting point section and the selected end point section as target frequent appearance areas;
a user extraction module that extracts users in the extracted target frequent appearance areas;
a trajectory extraction module that extracts trajectories between the frequent appearance areas of the extracted users from the trajectories between the frequent appearance areas for each of the users; and
a starting to end point trajectory extraction module that extracts trajectories from the starting point section to the end point section among the extracted trajectories as starting to end point trajectories.

6. The location information analysis device according to Claim 3 or 4, wherein the travel mode determination module comprises:
a travel speed calculation module that obtains a distance and a time difference between the point data adjacent along time series among the point data over a plurality of points of time about each of the users and calculates a travel speed between the point data based on the distance and the time difference between the point data; and
a determination module that determines a travel mode between the point data based on the calculated travel speed between the point data, the location information contained in the point data, and the prestored route map data of public transportation.

7. The location information analysis device according to any one of Claims 1 to 4, wherein the frequent appearance area extraction module comprises:
a total user density calculation module that calculates density of the input point data of all users in each of a plurality of sections partitioned on the two-dimensional map data in advance; and
a first extraction module that extracts areas composed of a plurality of adjacent sections where the calculated density of the point data of all users is equal to or higher than a predetermined criterion value as the frequent appearance areas.

8. The location information analysis device according to any one of Claims 1 to 4, wherein the frequent appearance area extraction module comprises:
a grouping module that obtains a distance between the point data when the input point data of all users are plotted on the two-dimensional map data and groups the point data of which the obtained distance is equal to or shorter than a predetermined criterion distance; and
a second extraction module that extracts areas including a plurality of grouped point data on the two-dimensional map data as the frequent appearance areas.

9. The location information analysis device according to any one of Claims 1 to 4, wherein the frequent appearance area extraction module comprises:
a classification module that classifies the input point data of all users by user;
a user density calculation module that calculates density of the classified point data of each of the users in each of a plurality of sections partitioned on the two-dimensional map data in advance;
an adding module that adds the calculated density of the point data of each of the users in each of the sections together for each of the sections and thereby obtains density of the point data of all users in each of the sections; and
a third extraction module that extracts areas composed of a plurality of adjacent sections where the calculated density of the point data of all users is equal to or higher than a predetermined criterion value as the frequent appearance areas.

10. The location information analysis device according to any one of Claims 1 to 4, wherein the frequent appearance area extraction module comprises:
a classification module that classifies the input point data of all users by user;
a user grouping module that obtains a distance between the point data when the classified point data of each of the users are plotted on two-dimensional map data and groups the point data of which the obtained distance is equal to or shorter than a predetermined criterion distance for each of the users;
a superposition module that superposes areas including a plurality of point data grouped for each of the users on the two-dimensional map data for all users on the two-dimensional map data; and
a fourth extraction module that extracts superposed areas as the frequent appearance areas.

11. The location information analysis device according to any one of Claims 1 to 4, wherein the user number calculation module leaves one trajectory and deletes the other trajectories among a plurality of starting to end point trajectories for the same user, and determines the remaining number of trajectories among the extracted starting to end point trajectories as the number of traveling users from the starting point section to the end point section.

12. The location information analysis device according to Claim 3 or 4, wherein the travel mode-specific user number calculation module leaves one trajectory and deletes the other trajectories among a plurality of starting to end point trajectories for the same user, and determines the remaining number of trajectories for each travel mode among the extracted starting to end point trajectories as the number of traveling users from the starting point section to the end point section for each travel mode.

13. The location information analysis device according to any one of Claims 1 to 4, wherein the total traveler number calculation module calculates the total number of traveling people from the starting point section to the end point section by calculating a ratio of an actually measured value of the number of traveling users to a daytime population figure related to any one of a predetermined frequent appearance area, the starting point section and the end point section as a ratio of the number of traveling users to the total number of traveling people, and multiplying the calculated ratio by the number of traveling users.

14. The location information analysis device according to Claim 3 or 4, wherein the travel mode-specific traveler number calculation module calculates the number of traveling people from the starting point section to the end point section for each travel mode by calculating a ratio of an actually measured value of the number of traveling users to a daytime population figure related to any one of a predetermined frequent appearance area, the starting point section and the end point section as a ratio of the number of traveling users to the number of traveling people, and multiplying the calculated ratio by the number of traveling users for each travel mode.

15. A location information analysis device that analyzes information on number of traveling people from a starting point section to an end point section based on point data containing location information indicating a location of a user, time information when the location information is obtained, and user identification information of the user, comprising:
a selection module that selects a starting point section and an end point section;
a point data input module that inputs the point data over a plurality of points of time about a plurality of users;
a frequent appearance area extraction module that extracts areas where the point data are densely congested in excess of a predetermined criterion as frequent appearance areas of the plurality of users based on a distribution of the point data when the input point data are plotted on two-dimensional map data;
a user trajectory extraction module that combines the point data of each of the users and the extracted frequent appearance areas on the two-dimensional map data, finds trajectories between the frequent appearance areas for each of the users based on time-series transition of a relative location of the point data of each of the users in relation to the frequent appearance areas in the combined data, and extracts trajectories from the selected starting point section to the selected end point section among the trajectories between the frequent appearance areas of each of the users as starting to end point trajectories;
a user number calculation module that calculates number of traveling users from the starting point section to the end point section by counting a plurality of starting to end point trajectories for the same user as one trajectory in the extracted starting to end point trajectories;
a total traveler number calculation module that calculates total number of traveling people from the starting point section to the end point section, including people irrelevant to the point data in addition to the users, based on the calculated number of traveling users and a ratio of the number of traveling users to the total number of traveling people; and
an output module that outputs the calculated total number of traveling people from the starting point section to the end point section.

16. The location information analysis device according to Claim 15, further comprising:
a travel mode determination module that determines a travel mode in the starting to end point trajectories based on a plurality of point data on the extracted starting to end point trajectories and prestored route map data of public transportation;
a travel mode-specific user number calculation module that calculates number of traveling users from the starting point section to the end point section for each travel mode by counting a plurality of the extracted starting to end point trajectories; and
a travel mode-specific traveler number calculation module that calculates number of traveling people from the starting point section to the end point section, including people irrelevant to the point data in addition to the users, for each travel mode based on the calculated number of traveling users for each travel mode and a ratio of the number of traveling users to the number of traveling people,
wherein the output module further outputs the calculated number of traveling people from the starting point section to the end mode.

17. A location information analysis method, executed by a location information analysis device, for analyzing information on number of traveling people from a starting point section to an end point section, comprising:
a point data input step of inputting point data over a plurality of points of time about a plurality of users, the point data containing location information indicating a location of a user, time information when the location information is obtained, and user identification information of the user;
a frequent appearance area extraction step of extracting areas where the point data are densely congested in excess of a predetermined criterion as frequent appearance areas of the plurality of users based on a distribution of the point data when the input point data are plotted on two-dimensional map data;
a user trajectory extraction step of combining the point data of each of the users and the extracted frequent appearance areas on the two-dimensional map data, finding trajectories between the frequent appearance areas for each of the users based on time-series transition of a relative location of the point data of each of the users in relation to the frequent appearance areas in the combined data, and extracting trajectories from the selected starting point section to the selected end point section among the trajectories between the frequent appearance areas of each of the users as starting to end point trajectories; and
a user number calculation step of calculating number of traveling users from the starting point section to the end point section by counting a plurality of starting to end point trajectories for the same user as one trajectory in the extracted starting to end point trajectories.

18. The location information analysis method according to Claim 17, further comprising:
a total traveler number calculation step of calculating total number of traveling people from the starting point section to the end point section, including people irrelevant to the point data in addition to the users, based on the calculated number of traveling users and a ratio of the number of traveling users to the total number of traveling people.

19. A location information analysis method, executed by a location information analysis device, for analyzing information on number of traveling people from a starting point section to an end point section, comprising:
a selection step of selecting a starting point section and an end point section;
a point data input step of inputting point data over a plurality of points of time about a plurality of users, the point data containing location information indicating a location of a user, time information when the location information is obtained, and user identification information of the user;
a frequent appearance area extraction step of extracting areas where the point data are densely congested in excess of a predetermined criterion as frequent appearance areas of the plurality of users based on a distribution of the point data when the input point data are plotted on two-dimensional map data;
a user trajectory extraction step of combining the point data of each of the users and the extracted frequent appearance areas on the two-dimensional map data, finding trajectories between the frequent appearance areas for each of the users based on time-series transition of a relative location of the point data of each of the users in relation to the frequent appearance areas in the combined data, and extracting trajectories from the selected starting point section to the selected end point section among the trajectories between the frequent appearance areas of each of the users as starting to end point trajectories;
a user number calculation step of calculating number of traveling users from the starting point section to the end point section by counting a plurality of starting to end point trajectories for the same user as one trajectory in the extracted starting to end point trajectories;
a total traveler number calculation step of calculating total number of traveling people from the starting point section to the end point section, including people irrelevant to the point data in addition to the users, based on the calculated number of traveling users and a ratio of the number of traveling users to the total number of traveling people; and
an output step of outputting the calculated total number of traveling people from the starting point section to the end point section.

20. The location information analysis method according to Claim 19, further comprising:
a travel mode determination step of determining a travel mode in the starting to end point trajectories based on a plurality of point data on the extracted starting to end point trajectories and prestored route map data of public transportation;
a travel mode-specific user number calculation step of calculating number of traveling users from the starting point section to the end point section for each travel mode by counting a plurality of starting to end point trajectories for the same user as one trajectory in the extracted starting to end point trajectories; and
a travel mode-specific traveler number calculation step of calculating number of traveling people from the starting point section to the end point section, including people irrelevant to the point data in addition to the users, for each travel mode based on the calculated number of traveling users for each travel mode and a ratio of the number of traveling users to the number of traveling people,
wherein the output step, the location information analysis device further outputs the calculated number of traveling people from the starting point section to the end point section for each travel mode.
